# EUROPÄISCHE PATENTSCHRIFT

(11) **EP 0 748 248 B1**
(45) Veröffentlichungstag und Bekanntmachung des Hinweises auf die Patenterteilung: **29.10.1997**
(21) Anmeldenummer: 95911199.8
(22) Anmeldetag: 27.02.1995
(51) Int. Cl.: B01D 21/00, B01D 21/24

(54) **KLÄRBECKEN**
SETTLEMENT TANK
BASSIN DE DECANTATION

(30) Priorität: 02.03.1994 DE 9403564 U; 14.01.1995 DE 19500974
(43) Veröffentlichungstag der Anmeldung: 18.12.1996
(73) Patentinhaber: Glaser, Bernd, D-22459 Hamburg (DE)
(72) Erfinder: Glaser, Bernd, D-22459 Hamburg (DE)
(74) Vertreter: Siemons, Norbert, Dr.-Ing. Patentanwälte Hauck, Graalfs, Wehnert, Döring, Siemons
(86) Internationale Anmeldenummer: DE9500251
(87) Internationale Veröffentlichungsnummer: WO9523638

(56) Entgegenhaltungen:
- EP-A- 0 450 109
- EP-A- 0 507 057
- WO-A-88/00856
- US-A- 2 780 361
- US-A- 4 154 678

## Beschreibung

Die Erfindung betrifft ein Klärbecken nach dem Oberbegriff des Anspruches 1.

Bei der Schlammabscheidung in Klärbecken fällt neben dem Bodenschlamm auch sogenannter Schwimmschlamm an. Dieser Schwimmschlamm sammelt sich an der Wasseroberfläche und muß mit geeigneten Einrichtungen abgezogen und entfernt werden.

Diese Einrichtungen können eine sogenannte Skimrinne aufweisen. Dabei handelt es sich um eine Rinne, deren Vorderkante so einstellbar ist, daß sie geringfügig in den Wasserspiegel eintaucht und gerade der Schwimmschlamm überlaufen und aus der Rinne abgezogen werden kann. Die Überlaufkante ist in der Regel einstellbar, weil sich die Eintauchtiefe durch Wasserspiegelschwankungen, ungenaues Bauwerk, insbesondere Niveau-Unterschiede der Laufbahn eines die Rinne tragenden Räumers, etc. ändern kann.

Die Überlaufkante wird in der Regel von einer Bedienungsperson manuell eingestellt. Hierdurch ist eine schnelle Korrektur einer geänderten Eintauchtiefe praktisch unmöglich. Dementsprechend trennt die Skimrinne den Schwimmschlamm nur unzureichend vom Reinwasser ab.

Davon ausgehend liegt der Erfindung die Aufgabe zugrunde, ein Klärbecken der eingangs genannten Art mit einer verbesserten Anpassung des Schwimmschlammabzuges an Schwankungen der Wasseroberfläche zu schaffen.

Die Lösung dieser Aufgabe ist im Anspruch 1 angegeben. Vorteilhafte Ausgestaltungen sind in den Unteransprüchen enthalten.

Beim erfindungsgemäßen Klärbecken ermöglicht ein Auftriebskörper ein Erfassen sämtlicher Niveau-Änderungen der Wasseroberfläche. Der Auftriebskörper ist in die Rinne integriert und steuert diese so, daß die Überlaufkante der Rinne stets auf einen bestimmten Abstand von der Wasseroberfläche eingestellt ist. Damit werden die Bedingungen für den Schwimmschlammabzug konstant gehalten und dessen Trennung vom Reinwasser verbessert. Eine Kontrolle und Einstellung durch eine Bedienperson ist bei der automatischen Rinneneinstellung nicht mehr erforderlich.

Der Auftriebskörper kann in einem einfachen Fall als rinnenparalleler Hohlzylinder mit stirnseitigen Abschlüssen ausgebildet sein. Er kann sich zwischen Überlaufkante und Achse befinden oder in die Rinnenwand mit der Überlaufkante integriert sein. Eine Verstellbarkeit des Auftriebskörpers und/oder des Schwenklagers der Abzugskante ermöglichen ein Einstellen der Gewichtsmomente bzw. Verstellkräfte und Veränderung des Gesamtschwenkbereichs.

Bei einer weiteren Ausgestaltung weist die Rinne beidseitig der Achse zum Schwenken der Rinne verschiedene Auftriebsvolumina auf. Bevorzugt sind die Auftriebsvolumina vom Innenraum der Rinne gebildet, der im Unterbereich den Schwimmschlamm aufnimmt. Die unsymmetrische Anordnung der Auftriebsvolumina bezüglich der Achse kann (auch bei symmetrischem Rinnenquerschnitt) durch außerzentrische Anordnung der Achse und/oder durch unsymmetrische Gestaltung der Rinne erreicht werden. Infolgedessen ändern sich bei Änderung der Wasserspiegel außerhalb bzw. innerhalb der Rinne die Auftriebskräfte auf den beiden Seiten der Achse in unterschiedlicher Weise, woraus sich die Rinne nachstellende Drehmomente ergeben. Die Schwimmschlammabzugsmenge wird auch hier mit der Pumpenleistung definiert. Somit paßt sich die Eintauchtiefe der Überlaufkante automatisch der Pumpenleistung an. Je größer die Pumpenleistung ist, desto tiefer taucht die Überlaufkante ein. Bei diesem System wird der Schwimmschlamm kontinuierlich, d.h. ohne Unterbrechung abgezogen. Die Überlaufkante pendelt sich sofort auf den Wasserspiegel ein, um dann in dieser Lage zu verharren. Die Unsymmetrie muß so gewählt sein, daß bei fallendem Wasserspiegel der Auftrieb auf der Seite der Überlaufkante relativ zum Auftrieb auf der gegenüberliegenden Seite der Achse abnimmt.

Die Erstreckungen der Rinne von der Achse bis zur Überlaufkante und zur gegenüberliegenden Hinterkante ein Verhältnis von mindestens 1:4 haben, um größere Wasserspiegelschwankungen ausgleichen zu können. Das Verhältnis kann sogar zu 1:1 oder 1:<1 angesetzt sein, um noch größere Wasserspiegelschwankungen ausgleichen zu können. Wenn die Achse näher an der Hinterkante als an der Überlaufkante angeordnet ist, kann durch eine unsymmetrische Form der Rinne sichergestellt werden; daß bei fallendem Wasserspiegel der Auftrieb auf der Seite der Hinterkante größer wird als auf der Seite der Überlaufkante und sich somit ein die Überlaufkante eintauchendes Drehmoment ergibt.

Bei manchen Anwendungsfällen können starke Wasserspiegelschwankungen auftreten. Dann ist eine entsprechende Verstellbarkeit der Überlaufkante wünschenswert. Dies ist um so leichter, je weiter die Achse zur Hinterkante verschoben wird. Hierbei muß aber darauf geachtet werden, daß das von der Auftriebskraft auf der Seite der Hinterkante erzeugte Drehmoment größer ist als das auf der anderen Seite. Dies kann positiv beeinflußt werden, wenn die Rinne asymmetrisch ausgeführt wird.

Die Rinne kann durch Gewichte auf der einen oder anderen Seite der Achse austariert werden. Wenn das Gewicht auf der Seite der Hinterkante aufgesetzt wird, muß der Wasserspiegel im Inneren der Rinne stärker fallen, bevor die Überlaufkante der Rinne eintaucht. Umgekehrt taucht die Rinne früher ein, wenn das Gewicht auf der Seite der Überlaufkante angesetzt wird. Dies kann wichtig sein, wenn eine Schwimmschlammpumpe im Inneren der Rinne installiert wird.

Bevorzugt weist die Rinne einen nach unten sich verjüngenden Querschnitt auf. Dabei kann die Rinnenwand mit der Überlaufkante zur Wasseroberfläche geneigt sein. Die Neigung kann so gewählt sein, daß eine Veralgung durch Sonneneinstrahlung weitgehend verhindert wird.

Bei Anordnung der Schwimmschlammpumpe in der Rinne braucht nicht wie üblich ein eigener Pumpensumpf vorgesehen zu sein. Für eine kostengünstige Fertigung kann vielmehr die Form der Rinne so gewählt sein, daß auch noch eine Pumpe im Innenraum Platz hat. Selbstverständlich kann die Rinne auch mittels eines Schlauchs flexibel mit einer außen liegenden Pumpe oder einem Pumpensumpf verbunden werden.

Da die Rinne mit dem Pumpensumpf oder dem Sammelkasten eine Einheit bildet, findet innerhalb der Rinne eine Querströmung statt. Um zu verhindern, daß bei dieser Querströmung nur die unteren Flüssigkeitsbereiche strömen und der Schwimmschlamm oben liegen bleibt, kann die Rinne neben Pumpensumpf oder Sammelkasten Begrenzungen für den Strömungsquerschnitt in Querrichtung haben. Die Begrenzungen können als Überfallbleche und/oder als Umlenkbleche ausgebildet sein. Es kann sich aber auch um eine Verringerung des gesamten Rinnenquerschnitts handeln. Die Begrenzungen sorgen dafür, daß der Fließvorgang beschleunigt an der Oberfläche stattfindet und den Schwimmschlamm mitreißt.

Des weiteren kann es nützlich sein, die Rinne trotz automatischer Justierung einstellen zu können. Hierfür kann eine Betätigungseinrichtung mit der Rinne verbunden sein. Die Betätigungseinrichtung kann manuell betätigbar und zu einem Laufsteg einer Räumerbrücke geführt sein.

Des weiteren kann es nützlich sein, von Zeit zu Zeit die Hinterkante der Rinne einzutauchen, um von dieser Seite Schwimmschlamm abzuziehen. Dies kann mittels der Betätigungseinrichtung erfolgen. Hierzu ist es zudem vorteilhaft, wenn die Hinterkante der Rinne ähnlich lang ist wie die Überlaufkante. Dies kommt auch einer kostengünstigen Herstellung zugute. Die Rinne kann dann nämlich in einem Zug gekantet und somit gefertigt werden.

Die Überlaufkante ist bevorzugt annähernd so lang ausgeführt wie die gesamte Rinne bzw. die Sammelstelle, so daß der gesamte Baukörper kostengünstig in einem Zug gefertigt werden kann.

Eine besonders interessante Variante ergibt sich, wenn die Rinne mit automatischer Anpassung der Überlaufkante an das Wasserniveau mit einer oder mehreren Schwimmschlammbremsen oder Schwimmschlammschikanen kombiniert wird. Damit ergibt sich in Teilbereichen eine sogenannte Zwangsräumung und der Schwimmschlamm kann erheblich komprimierter bzw. dicker abgezogen werden. Bevorzugt ist die aus dem Wasser ragende Wand der Schwimmschlammbremse an einer Aufhängung in einem Abstand vom Bewegungsbereich der Rinne aufgehängt. Rinne und Schwimmschlammbremse sind mittels der Verschiebeeinrichtung relativ zueinander verschiebbar, wobei die Schwimmschlammbremse beim Auftreffen der Rinne auf die Wand eine Ausweichbewegung macht und nach Passieren der Rinne von einer Rückstelleinrichtung in ihre Ausgangslage zurückbewegt wird.

Wenn die Aufhängeachse eine Schwenkachse ist, kann die Schwimmschlammbremse mit einer mehr oder weniger starren Wand beim Auftreffen der Rinne eine ausweichende Schwenkbewegung machen und nach dem Passieren der Rinne in ihre Ausgangslage zurückschwenken. Die Schwimmschlammbremse kann aber auch eine feste Aufhängung haben und mit einer flexiblen Wand der Rinne ausweichen.

Die Rückstelleinrichtung kann ein an der Schwimmschlammbremse im Bereich der Wasseroberfläche befestigter Auftriebskörper und/oder ein unterhalb ihrer Aufhängachse befestigtes Gewicht sein.

Das Klärbecken kann einen Kreisquerschnitt und die Verschiebeeinrichtung eine drehbare Räumerbrücke mit Zentrallagerung haben. Die Rinne und ggf. die Schwimmschlammbremse ist dann radial zum Zentrum des Klärbeckens ausgerichtet. Dann ist die Rinne an der Räumerbrücke fixiert und ggf. die Schlimmschlammbremse am Klärbecken fest installiert oder umgekehrt. Für eine Schwimmschlammverdichtung unabhängig von der Windrichtung können mehrere Schwimmschlammbremsen oder Rinnen in sternförmiger Anordnung im Becken vorgesehen sein.

Eine weitere Ausgestaltung sieht vor, daß die Rinne unabhängig von der Regelung mit einer vorderen und/oder hinteren Überlaufkante in eine eingetauchte Position schwenkbar ist. Dies ermöglicht die Entfernung von Schwimmschlamm, der sich allmählich vor oder hinter der Rinne aufbauen kann.

Weitere Einzelheiten und Vorteile der Erfindung ergeben sich aus der nachfolgenden Beschreibung der anliegenden Zeichnungen bevorzugter Ausführungsbeispiele. In den Zeichnungen zeigen:
- Fign. 1 und 2: eine Rinne mit integriertem Auftriebskörper zwischen Schwenkachse und Überlaufkante in einer Stellung ohne Schwimmschlammüberlauf im Schnitt sowie in der Draufsicht;
- Fig. 3: dieselbe Rinne in einer Stellung mit Schwimmschlammüberlauf im Schnitt;
- Fig. 4: eine entsprechende Rinne mit einstellbarem Auftriebskörper bzw. einstellbarem Schwenklager im Schnitt;
- Fign. 5 und 6: zwei Rinnen mit in eine Wand integriertem Auftriebskörper verschiedener Größe jeweils im Schnitt;
- Fign. 7 und 8: Rinne gemäß Fig. 1 bis 3 mit einer Schwimmschlammbremse beim Komprimieren des Schwimmschlammes und beim Passieren der Schwimmschlammbremse jeweils im Schnitt;
- Fig. 9: Rundklärbecken mit derselben Rinne und drei Schwimmschlammbremsen in grob schematischer Draufsicht;
- Fig. 10: eine schwenkbare Rinne mit Achse nahe der Überlaufkante und asymmetrischer Form im Querschnitt in Ausgangslage (ausgezogene Linien) und in geschwenkter Lage (gestrichelt);
- Fig. 11 und 12: eine schwenkbare Rinne mit symmetrischem Querschnitt und Schwenkachse nahe der Überlaufkante im Querschnitt in Ausgangslage (ausgezogen) und geschwenkt (gestrichelt) (Fig. 11) sowie in Draufsicht (Fig. 12);
- Fig. 13 bis 15: eine schwenkbare Rinne mit mittiger Achse und asymmetrischer Form im Querschnitt in Ausgangslage (ausgezogen) und geschwenkt (gestrichelt) (Fig. 13), Draufsicht (Fig. 14) und in Längsschnitt (Fig. 15).

Bei den Ausführungsbeispielen ist in einem Klärbecken eine kastenförmige Rinne 1 vorgesehen. Die Rinne 1 hat etwa einen U-förmigen Querschnitt, wobei im Rinnenboden 2 ein Abzugsrohr 3 mündet. Eine Rückwand 4 der Rinne ragt stets über die Wasseroberfläche 5' hinaus. An den Stirnseiten weist die Rinne 1 Abschlußwände 8 auf, wobei zwischen Wandabschnitt 7 und Abschlußwänden nicht gezeigte Gummidichtungen angeordnet sind. Die Rinne 1 wird von einer nicht gezeigten Verschiebeeinrichtung in Richtung V bewegt, so daß sie die Wasseroberfläche 5' abskimt.

Die nachfolgenden Ausführungsbeispiele sind einfache und robuste mechanische Lösungen. Bei der Beschreibung werden dieselben Bezugsziffern wie zuvor verwendet, soweit übereinstimmende Elemente angesprochen sind.

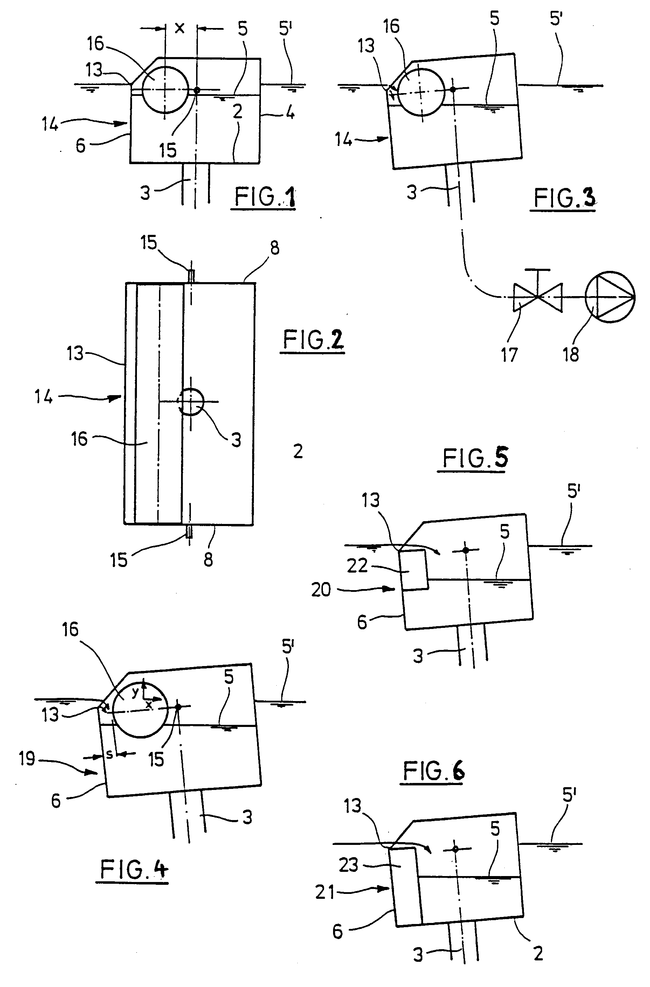

Die Rinne 14 gemäß Fig. 1 - 3 hat an ihren Abschlußwänden 8 Schwenklager 15 von denen nur die Zapfen dargestellt sind und um die sie um eine Längsachse schwenkbar ist. Die Rinne 14 weist einen parallel zur Schwenkachse erstreckten Auftriebskörper 16 in Form eines Hohlzylinders mit Kreisquerschnitt auf. Der Hohlzylinder 16 ist zwischen den Schwenklagern 15 und der Überlaufkante 13 angeordnet und stirnseitig von den Abschlußwänden 8 abgeschlossen. Der Auftriebskörper 16 kann aufgrund seines Abstandes x von der Schwenkachse durch Aufschwimmen im Wasser ein rechtsdrehendes Drehmoment auf die Rinne 14 ausüben. Dieses Drehmoment hängt von der Höhe der Wasseroberfläche 5 und vom Abstand in der Rinne 14 ab.

Bei einem Niveau der Wasseroberfläche 5 in der Rinne 14 gemäß Fig. 1 ist mit der Rinne die Überlaufkante 13 so hoch geschwenkt, daß gerade kein Schwimmschlamm überlaufen kann. Ist die Wasseroberfläche 5 in der Rinne 14 gemäß Fig. 3 abgesunken, so schwenkt die Rinne aufgrund ihres Eigengewichts im Gegensinne in eine Position, in der sie von dem Auftriebskörper 16 gehalten wird. Dabei sinkt die Überlaufkante 13 unter die Wasseroberfläche 5' außerhalb der Rinne 14, so daß Schwimmschlamm abgezogen wird. Bei leerer Skimrinne 14 ist diese mit der Überlaufkante 13 maximal heruntergeschwenkt, so daß ein maximaler Wassereintritt möglich ist.

In der Praxis bedeutet dies, daß beim Befüllen des Beckens zunächst die Überlaufkante 13 der Rinne 14 nach unten hängt. Wenn der Wasserspiegel 5' steigt, fließt Wasser in die Rinne 14. Mit steigendem Wasserspiegel 5 in der Rinne wird diese von dem Schwimmer 16 emporgeschwemmt, und die Überlaufkante 13 steigt nach oben. Wenn die Überlaufkante den äußeren Wasserspiegel 5' erreicht hat bzw. durchschneidet, wird die Wasserzufuhr unterbrochen, und der Überlauf wird unterbrochen.

Wird der Rinne 14 Wasser entzogen, senkt sich aufgrund des geringeren Auftriebes die Überlaufkante 13 ab und es fließt genau so viel Wasser bzw. Schwimmschlamm nach, wie der Rinne entzogen wird. Je nach dem Mengenstrom von Wasser bzw. Schlamm durch den Abzug 3 wird also die Eintauchtiefe der Überlaufkante 13 eingestellt. Bei einer dünnen Schwimmschlammschicht reicht eine kleine Abzugsleistung, wogegen bei einer dicken Schicht die Abzugsleistung erhöht werden kann. Bei dieser Version kann also durch Veränderung der Abzugsleistung die Eintauchtiefe der Überlaufkante 13 gesteuert und damit eine Anpassung an die Dicke der Schwimmschlammschicht erreicht werden. Gemäß Fig. 3 wird die Steuerung der Abzugsleistung mittels eines Drosselorgans 17 vor einer Schwimmschlammpumpe 18 durchgeführt. Dabei kann die Schwimmschlammpumpe 18 in der Rinne 14 sitzen, in einem eigenen Kasten sitzen, der mit der Rinne 14 mitdreht, in einem eigenen ortsfesten Kasten sitzen und über eine flexible Leitung mit der Rinne verbunden sein oder völlig außerhalb des Klärbeckens z.B. in einem Pumpensumpf sitzen, wobei ebenfalls eine flexible Verbindung zur Rinne 14 hergestellt ist.

Für die Steuerung der Überlaufkante 13 kann ferner ein Abzug 3 mit einer Gefälleleitung verbunden sein.

Diese Konstruktion kann für folgende Verfahrensweise genutzt werden: Da bei Inbetriebnahme eines Klärbeckens der Schwimmschlamm immer erst in dünner Konsistenz auftritt, kann die Abzugsleistung zunächst so gering eingestellt werden, daß sich eine geringe Eintauchtiefe der Überlaufkante 13 von nur 3 - 5 mm ergibt. Im Laufe der Zeit sammeln sich jedoch dickere Schwimmschlammschichten vor der Rinne 14 an, die in gewissen Zeitabständen durch Steigerung der Abzugsmenge in einem kurzen "Schwimmschlammschub" abgezogen werden können. Die Steuerung der Schwimmschlammschübe kann über eine Zeitschaltuhr erfolgen. Damit wird eine verbesserte Abtrennung des Schwimmschlammes vom Reinwasser erreicht, ohne daß sich Schwimmschlammansammlungen ergeben.

Die Rinne 19 gemäß Fig. 4 unterscheidet sich von der Rinne 14 dadurch, daß der Auftriebskörper 16 und/oder die Lagerzapfen 15 in Richtung x bzw. y verstellbar sind. Damit läßt sich das Drehmoment des Auftriebskörpers 16 um die Schwenklager 15 und damit die Feinfühligkeit der Regelung einfach verändern. Mit dem Auftriebskörper 16 kann außerdem der Spalt s zur Vorderwand 6 verändert werden. Bei richtiger Einstellung kann hier eine Sogwirkung erzeugt werden, die den über die Überlaufkante 13 eintretenden Schwimmschlamm verstärkt nach unten reißt.

Bei den Rinnen 20, 21 gemäß Fig. 5 und 6 ist im Unterschied zur Rinne 14 der Auftriebskörper 22, 23 ein Hohlzylinder mit Rechteckquerschnitt, der in die Vorderwand 6 integriert ist. Der Auftriebskörper 22, 23 geht jeweils von der Überlaufkante 13 aus und ist gemäß Fig. 5 nur über die halbe Höhe der Vorderwand 6 und gemäß Fig. 6 bis zum Rinnenboden 2 erstreckt. Die Auftriebskörper 22, 23 sind in den Rinnen 20, 21 angeordnet, so daß sie über die Wasseroberfläche 5 hinausstehen und deren Niveauänderungen folgen können.

Sämtliche Rinnen können alleine eingesetzt werden oder in Kombination mit Schwimmschlammeinweisschildern, welche den Schwimmschlamm zur Rinne führen, und/oder Spritzvorrichtungen, welche den Schwimmschlamm zur Rinne spritzen.

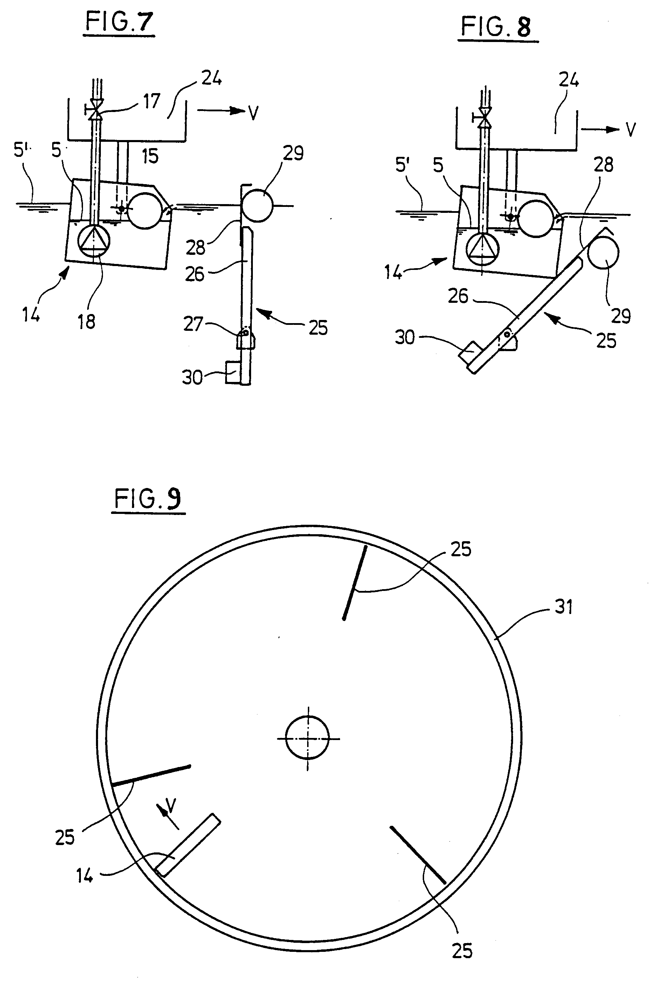

Des weiteren können sämtliche Rinnen zusammen mit Einrichtungen zum Komprimieren des Schwimmschlammes eingesetzt werden, die nachfolgend an Hand der Fig. 7 bis 10 erläutert werden. Gezeigt ist dort eine Rinne 14, deren Schwenklager 15 an einer in Verschieberichtung V beweglichen Räumerbrücke 24 gelagert sind. In der Rinne 14 sitzt eine Schwimmschlammpumpe 18, in deren Druckleitung sich ein Drosselorgan 17 befindet.

In Verschieberichtung V hinter der Rinne 14 befindet sich eine Schwimmschlammschikane bzw. Schwimmschlammbremse 25. Diese hat einen zweiarmigen Hebel 26, der unterhalb der Wasseroberfläche 5' bei 27 schwenkbar gelagert ist. Der Hebel 26 trägt oben eine Wand 28, die sich so weit unterhalb und oberhalb der Wasseroberfläche 5' erstreckt, daß sie bei aufgerichtetem Hebel 26 aufschwimmenden Schwimmschlamm sicher zurückhält. Der Hebel 26 wird in der aufgerichteten (z.B. vertikal oder geneigt) Position von einem Auftriebskörper 29 gehalten, der mit der Wand 28 verbunden ist. Auch ein Gewicht 30 am anderen Hebelarm belastet den Hebel 26 so, daß er stets von selbst in eine aufgerichtete Lage tendiert.

Gemäß Fig. 7 fährt die Rinne 14 auf die Schwimmschlammbremse 25 zu, wobei sich der zwischenliegende Schwimmschlamm immer mehr komprimiert und zugleich in die Rinne abgezogen wird. Dabei kann der Schwimmschlammabzug über einen Kontaktschalter im geeigneten Zeitpunkt eingeschaltet und somit der Komprimierungsgrad bzw. die Eindickung des Schwimmschlammes gesteuert werden. Gemäß Fig. 8 überfährt die Rinne 14 die Schwimmschlammbremse 25 und drückt dabei den Hebel 26 bzw. die Wand 28 nach unten. Sobald die Rinne 14 die Schwimmschlammbremse 25 frei gibt, kehrt diese unter dem Einfluß des Auftriebskörpers 29 bzw. des Gewichts 30 in ihre Ausgangslage zurück.

Gemäß Fig. 9 sind drei Schwimmschlammbremsen 25 sternförmig in einem Rundklärbecken 31 angeordnet. Die Rinne 14 wird in Verschieberichtung V am Außenrand des Rundklärbeckens 31 entlanggeführt und wirkt bei jeder Umdrehung mit sämtlichen Schwimmschlammbremsen 25 zusammmen.

Durch die Verteilung der Schwimmschlammbremsen 25 über den Beckenumfang ergeben sich Beckensegmente, die je nach Windrichtung mit Schwimmschlamm belegt werden. Hierdurch ist windunabhängig ein Komprimieren des Schwimmschlammes gesichert. Der Schwimmschlammabzug braucht nur auf der Seite eingeschaltet zu werden, in die der Schwimmschlamm geblasen wird. Das läßt sich relativ einfach bewerkstelligen, indem man in bestimmten Zeitabständen die Windrichtung mißt und die Schwimmschlammpumpe aktiviert, wenn sich die Rinne 14 in dem belegten Sektor befindet.

Anstatt eines schwenkbar gelagerten Hebels 26 ist auch ein federndes Blech, ein elastischer Gummilappen oder ein Bremsblech mit Gegengewicht denkbar, wobei dieses Bauteil oben aufgehängt ist und der ankommenden Rinne nach oben ausweicht. Dann wird jedoch die Befestigung der Rinne von unten her erfolgen.

Wichtig ist, daß die Schwimmschlammbremse der Rinne zum richtigen Zeitpunkt ausweichen kann. Dieses Ausweichen kann je nach Ausführung nach unten, nach oben oder seitwärts erfolgen.

Wahlweise kann die Rinne oder die Schwimmschlammbremse bewegt sein. Wichtig ist, daß zwischen diesen Bauteilen eine Relativbewegung stattfindet.

Besonders vorteilhaft kann sein, wenn als Reinwasserabzug radial angeordnete getauchte Reinwasserabzugsrohre installiert sind (wie die Schwimmschlammbremsen 25 Fig. 9). Dann können diese als Konsolen für die Drehpunkte 27 Fig. 7 dienen. Es muß lediglich darauf geachtet werden, daß diese Rohre so tief installiert werden, daß sie nicht mit der Rinne 14 kollidieren.

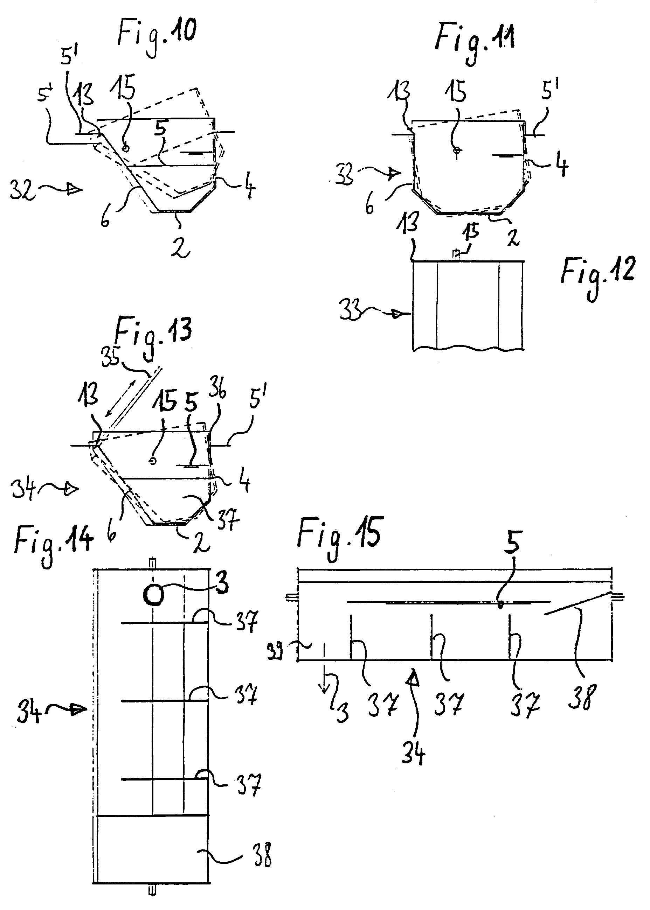

Die Rinnen der Fig. 10 bis 15 sind ebenfalls für Kombination mit Schwimmschlammeinweisschildern, Spritzvorrichtungen oder Einrichtungen zum Komprimieren des Schwimmschlammes geeignet. Die Rinne gemäß Fig. 10 hat eine stark zur Wasseroberfläche 5' geneigte Vorderwand 6, einen schmalen Boden 2 und eine Rückwand 4 mit einem geneigten Unterbereich und einem vertikalen Oberbereich. Diese Rinne 32 hat also einen asymmetrischen Querschnitt. Sie weist eine Schwenkachse 15 auf, die nahe der Überlaufkante 13 bzw. der geneigten Vorderwand 6 angeordnet ist.

Oberhalb des Wasserspiegels 5 hat die Rinne folglich beidseitig der Achse 15 unterschiedliche Auftriebsvolumina. Es wird angenommen, daß sich die Rinne in der Ausgangslage im Gleichgewicht befindet.

Wenn jetzt der Wasserspiegel 5 im Inneren der Rinne 32 fällt, beispielsweise weil der Schwimmschlammabzug erhöht wird bzw. der Wasserspiegel 5' fällt, ändern sich die Auftriebskräfte auf den beiden Seiten der Achse 15 unterschiedlich. Daraus resultiert ein Drehmoment, welches die Rinne entgegen dem Uhrzeigersinn dreht, so daß die Überlaufkante 13 absinkt. Die Verdrehung erfolgt soweit, bis die Drehmomente wieder im Gleichgewicht stehen. Dann strömt entweder bei unverändertem Wasserspiegel 5' mehr Wasser in die Rinne 32 oder bei gesunkenem Wasserspiegel 5' wird dieser wieder von der Überlaufkante 13 unterschnitten. Die Rinne 32 ist gestrichelt in der geschwenkten Gleichgewichtslage gezeigt.

Die Rinne 32 gemäß Fig. 10 muß für den Ausgleich geringer Schwankungen des Wasserspiegels 5' erheblich verschwenkt werden. Dies ist eine Folge der Anordnung der Achse 15 in der Nähe der Überlaufkante 13. Bei der Rinne 33 gemäß Fig. 11, 12 werden aufgrund der Anordnung der Achse 15 in weiterer Entfernung von der Überlaufkante 13 geringere Schwenkwege ermöglicht. Bei dieser Rinne sind die Vorderwand 6 und die Rückwand 4 bezüglich eines Bodens 2 symmetrisch ausgebildet und weisen jeweils einen geneigten Unterabschnitt und einen vertikalen Oberabschnitt auf. Entscheidend für die Funktion der Rinne 33 ist hier die außermittige Anordnung der Achse 15.

Die Rinne 34 gemäß Fig. 13 bis 15 hat eine asymmetrische Form entsprechend der Rinne gemäß Fig. 10. Die Achse 15 ist jedoch weiter von der Überlaufkante 13 in die Nähe der Mitte des oberen Öffnungsbereichs gerückt. Hier werden die unterschiedlichen Auftriebskräfte zur Nachstellung der Rinne vor allem durch die asymmetrische Rinnengestaltung bewirkt. Nahe der Überlaufkante 13 ist eine Bedienstange 35 angeordnet, die zum Laufsteg einer Brücke geführt ist. Mit Hilfe der Bedienstange 35 kann die Überlaufkante 13 bzw. die Hinterkante 36 der Rinne von Zeit zu Zeit unter die Wasseroberfläche 5' getaucht werden. Hierdurch wird ein zeitweilig verstärkter Schwimmschlammabzug erreicht.

Außerdem hat die Rinne 34 im Unterbereich in Querrichtung voneinander beabstandete, vertikale Querbleche 37. Zudem ist an einer Seite der Rinne im Oberbereich ein etwas zur Horizontalen geneigtes Strömungsblech 38 vorgesehen. Die Begrenzungen 37, 38 begrenzen die Querströmung innerhalb der Rinne 34 im wesentlichen auf den Oberbereich unterhalb der Wasseroberfläche 5. Folglich kann sich Schwimmschlamm nicht an der Wasseroberfläche 5 ansammeln und wird aus einem Sammelraum 39 durch den Schwimmschlammabzug 3 abgezogen. Die Rinne 34 stellt sich im übrigen aufgrund ihres oben geschilderten Schwenkverhaltens automatisch auf die Wasserspiegelhöhen 5', 5 ein.

## Patentansprüche

1. Klärbecken mit einem Zulauf für die klärende Trübe, einem Reinwasserabzug für das geklärte Wasser, einem Bodenschlammabzug für auf den Beckenboden abgesetzten Bodenschlamm und einem Schwimmschlammabzug für Schwimmschlamm an der Wasseroberfläche, der eine parallel zur Wasseroberfläche erstreckte Rinne mit einer Überlaufkante, eine Einrichtung zum Einstellen der Überlaufkante auf einen bestimmten Abstand von der Wasseroberfläche mit einem Auftriebskörper und eine Verschiebeeinrichtung zum relativen Parallelverschieben von Rinne und Wasseroberfläche hat, dadurch gekennzeichnet, daß die Überlaufkante (13) an einer um eine Achse (15) schwenkbaren Rinne (14) ausgebildet ist, und daß der Auftriebskörper (16, 22, 23) integraler Bestandteil der Rinne (14, 32, 33, 34) ist.

2. Klärbecken nach Anspruch 1, dadurch gekennzeichnet, daß der Auftriebskörper (16) auf derselben Seite der Achse (15) wie die Überlaufkante (13) an der Rinne (14) befestigt ist.

3. Klärbecken nach Anspruch 2, dadurch gekennzeichnet, daß der Auftriebskörper (16) zwischen Überlaufkante (13) und Achse (15) der Rinne (14) angeordnet ist.

4. Klärbecken nach einem der Ansprüche 1 bis 3, dadurch gekennzeichnet, daß der Auftriebskörper ein Hohlzylinder (16) mit stirnseitigen Abschlüssen (8) ist.

5. Klärbecken nach einem der Ansprüche 1 bis 4, dadurch gekennzeichnet, daß der Auftriebskörper (22, 23) in eine die Überlaufkante (13) aufweisende Rinnenwand (6) integriert ist.

6. Klärbecken nach einem der Ansprüche 1 bis 5, dadurch gekennzeichnet, daß der Auftriebskörper (16) und/oder das Schwenklager (15) der Rinne (19) verstellbar ist.

7. Klärbecken nach einem der Ansprüche 1 bis 6, dadurch gekennzeichnet, daß die Rinne (14) einen Abzug (3) mit einstellbarem Durchsatz hat.

8. Klärbecken nach einem der Ansprüche 1 bis 7, dadurch gekennzeichnet, daß die Rinne (32, 33, 34) beidseitig der Achse (15) unterschiedliche Auftriebsvolumina aufweist.

9. Klärbecken nach Anspruch 8, dadurch gekennzeichnet, daß die Auftriebsvolumina von dem Innenraum der Rinne (32, 33, 34) gebildet sind, der im Unterbereich den Schwimmschlamm aufnimmt.

10. Klärbecken nach Anspruch 9, dadurch gekennzeichnet, daß die Erstreckung der Rinne (32, 33, 34) von der Achse (15) zur Hinterkante (36) maximal viermal so lang ist, wie die Erstreckung von der Achse zur Überlaufkante (13).

11. Klärbecken nach Anspruch 10, dadurch gekennzeichnet, daß die Erstreckung von der Achse (15) zur Hinterkante (36) maximal genauso lang ist, wie die Erstreckung von der Achse zur Überlaufkante (13).

12. Klärbecken nach einem der Ansprüche 8 bis 11, dadurch gekennzeichnet, daß die Rinne (32, 33, 34) einen nach unten verjüngten Querschnitt aufweist.

13. Klärbecken nach Anspruch 12, dadurch gekennzeichnet, daß die Rinnenwand (6) mit der Überlaufkante (13) zur Wasseroberfläche (5') geneigt ist, vorzugsweise so steil, daß eine Veralgung weitgehend verhindert wird.

14. Klärbecken nach einem der Ansprüche 1 bis 13, dadurch gekennzeichnet, daß die Rinne (32, 33, 34) zusätzliche Gewichte zum Verändern der Lage der Überlaufkante (13) bezüglich des Wasserspiegels (5, 5') aufweist.

15. Klärbecken nach einem der Ansprüche 1 bis 14, dadurch gekennzeichnet, daß eine Schwimmschlammpumpe im Innenraum der Rinne installiert ist.

16. Klärbecken nach einem der Ansprüche 1 bis 15, dadurch gekennzeichnet, daß die Rinne (34) neben einem Pumpensumpf oder Sammelkasten (39) Begrenzungen (37, 38) für den Strömungsquerschnitt in Querrichtung hat.

17. Klärbecken nach Anspruch 16, dadurch gekennzeichnet, daß die Begrenzungen Leitbleche (37, 38) im Innenraum der Rinne (34) sind.

18. Klärbecken nach einem der Ansprüche 1 bis 17, dadurch gekennzeichnet, daß eine Betätigungseinrichtung (35) zum gezielten Schwenken der Rinne (34) mit dieser verbunden ist.

19. Klärbecken nach einem der Ansprüche 1 bis 18, dadurch gekennzeichnet, daß die Länge der Hinterkante (36) der Rinne (34) etwa der Länge der Überlaufkante (13) entspricht.

20. Klärbecken nach einem der Ansprüche 1 bis 19, dadurch gekennzeichnet, daß die Überlaufkante (13) etwa so lang wie die gesamte Rinne (34) ist.

21. Klärbecken nach einem der Ansprüche 1 bis 20, dadurch gekennzeichnet, daß mindestens eine Schwimmschlammbremse (25) mit einer über die Wasseroberfläche (5') reichenden Wand (28) vorgesehen ist, daß die Wand (28) eine Aufhängung (27) in einem Abstand vom Bewegungsbereich der Rinne (14) hat, daß Rinne und Schwimmschlammbremse (25) von der Verschiebeeinrichtung (24) relativ zueinander verschiebbar sind, wobei die Schwimmschlammbremse (25) beim Auftreffen der Rinne (14) auf die Wand (28) eine Ausweichbewegung macht und nach Passieren der Rinne von einer Rückstelleinrichtung (29, 30) in ihre Ausgangslage zurückbewegt wird.

22. Klärbecken nach Anspruch 21, dadurch gekennzeichnet, daß die Aufhängung eine Schwenklagerung (27) und die Ausweichbewegung eine Schwenkbewegung der Schwimmschlammbremse (25) ist.

23. Klärbecken nach Anspruch 21, dadurch gekennzeichnet, daß die Wand aus einem flexiblen Material und die Ausweichbewegung eine Materialverformung ist.

24. Klärbecken nach einem der Ansprüche 21 bis 23, dadurch gekennzeichnet, daß die Rückstelleinrichtung einen an der Schwimmschlammbremse (25) im Bereich der Wasseroberfläche (5') befestigten Auftriebskörper (29) aufweist.

25. Klärbecken nach einem der Ansprüche 21 bis 24, dadurch gekennzeichnet, daß die Rückstelleinrichtung ein unterhalb der Aufhängung (27) befestigtes Gewicht (30) aufweist.

26. Klärbecken nach einem der Ansprüche 1 bis 25, dadurch gekennzeichnet, daß es ein Rundklärbecken (31) mit um ein Zentrallager drehbarer Räumerbrücke (24) und mit radial zum Zentrum ausgerichteter Rinne (14) und ggf. entsprechend ausgerichteter Schwimmschlammbremse (25) ist, und daß die Rinne (14) an der Räumerbrücke (24) fixiert und ggf. die Schwimmschlammbremse (25) klärbeckenfest installiert ist oder umgekehrt.

27. Klärbecken nach Anspruch 26, dadurch gekennzeichnet, daß mehrere Schwimmschlammbremsen (25) oder Rinnen (14) in sternförmiger Anordnung vorgesehen sind.

28. Klärbecken nach einem der Ansprüche 21 bis 27, dadurch gekennzeichnet, daß radial angeordnete, getauchte Reinwasserabzugsrohre Schwenklagerungen für die Schwimmschlammbremsen aufweisen.

29. Klärbecken nach einem der Ansprüche 1 bis 18, dadurch gekennzeichnet, daß die Rinne mittels einer Betätigungseinrichtung (35) mit einer vorderen und/oder hinteren Überlaufkante in eine von der geregelten Position unabhängige eingetauchte Position schwenkbar ist.

30. Klärbecken nach einem der Ansprüche 1 bis 29, dadurch gekennzeichnet, daß der Schwimmschlammabzug kontinuierlich ist.

31. Klärbecken nach einem der Ansprüche 1 bis 30, dadurch gekennzeichnet, daß die Eintauchtiefe der Überlaufkante (13) der Rinne (14) im wesentlichen von der Abzugsleistung bestimmt ist.

## Claims

1. A settlement tank with an inlet for the dirty water being cleansed, a pure water outlet for the cleansed water, a floor sludge outlet for sludge deposited on the tank floor, and a floating sludge outlet for the floating sludge on the surface of the water comprising a channel extending parallel to the water surface and having an overflow edge, a device for adjusting the overflow edge at a given distance from the water surface and having a float, and a displacing device for the relative parallel displacement of the channel and the water surface, characterised in that the overflow edge (13) is formed on a channel (14) which is pivotable about an axis (15), and that the float (16, 22, 23) is an integral component of the channel (14, 32, 33, 34).

2. A settlement tank according to claim 1, characterised in that the float (16) is fastened on the channel (14) on the same side of the axis (15) as the overflow edge (13).

3. A settlement tank according to claim 2, characterised in that the float (16) is arranged between the overflow edge (13) and the axis (15) of the channel (14).

4. A settlement tank according to one of claims 1 to 3, characterised in that the float is a hollow cylinder with end face stops (8).

5. A settlement tank according to one of claims 1 to 4, characterised in that the float (22, 23) is integrated into a channel wall (6) comprising an overflow edge (13).

6. A settlement tank according to one of claims 1 to 5, characterised in that the float (16) and/or the pivoting bearing (15) of the channel (19) is adjustable.

7. A settlement tank according to one of claims 1 to 6, characterised in that the channel (14) has an outlet with an adjustable throughput.

8. A settlement tank according to one of claims 1 to 7, characterised in that the channel (32, 33, 34) on the two sides of the axis (15) comprises different bouyancy volumes.

9. A settlement tank according to claim 8, characterised in that the buoyancy volumes are formed by the inner space of the channel (32, 33, 34), the inner space picking up the floating sludge in the lower region.

10. A settlement tank according to claim 9, characterised in that the extension of the channel (32, 33, 34) from the axis (15) to the rear edge (36) is at a maximuum four times as long as the extension from the axis to the overflow edge (13).

11. A settlement tank according to claim 10, characterised in that the extension from the axis (15) to the rear edge (36) is at a maximum exactly as long as the extension from the axis to the overflow edge (13).

12. A settlement tank according to one of claims 8 to 11, characterised in that the channel (32, 33, 34) comprises a cross section which tapers downwards.

13. A settlement tank according to claim 12, characterised in that the channel wall (6) with the overflow edge (13), is inclined to water surface (5'), preferably so steeply that a build up of algae is largely prevented.

14. A settlement tank according to one of claims 1 to 13, characterised in that the channel (32, 33, 34) comprises additional weights for changing the position of the overflow edge (13) with regard to the water plane (5, 5').

15. A settlement tank according to one of claims 1 to 14, characterised in that a floating sludge pump is installed in the inner space of the channel.

16. A settlement tank according to one of claims 1 to 15, characterised in that the channel (34), besides a pump sump or a receptacle (39), has delimitations (37, 38) for the flow cross section in the transverse direction.

17. A settlement tank according to claim 16, characterised in that the delimitations are guiding plates (37, 38) in the inner space of the channel (34).

18. A settlement tank according to one of claims 1 to 17, characterised in that an operating device (35) for the concerted pivoting of the channel (34) is connected to this channel.

19. A settlement tank according to one of claims 1 to 18, characterised in that the length of the rear edge (36) of the channel (34) corresponds roughly to the length of the overflow edge (13).

20. A settlement tank according to one of claims 1 to 19, characterised in that the overflow edge (13) is approximately as long as the whole channel (34).

21. A settlement tank according to one of claims 1 to 20, characterised in that at least a floating sludge brake (25) with a wall (28) reaching over the water surface (5') is provided, that the wall (28) has a suspension (27) at a distance from the movement region of the channel (14), that the channel and the floating sludge brake (25) are displaceable relative to one another by the displacing device (24), wherein the floating sludge brake (25) makes a deflectional movement when the channel (14) impinges on the wall (28) and after passing the channel is moved back to its original position by a restoring device (29, 30).

22. A settlement tank according to claim 21, characterised in that the suspension is a pivoting bearing (27) of the floating sludge brake (25) and the deflectional movement is a pivoting movement of the floating sludge brake (25)

23. A settlement tank according to claim 21, characterised in that the wall is of a flexible material and the deflectional movement is a material deformation.

24. A settlement tank according to one of claims 21 to 23, characterised in that the restoring device comprises a float (29) fastened to the floating sludge brake (25) in the region of the water surface (5').

25. A settlement tank according to one of claims 21 to 24, characterised in that the restoring device comprises a weight (30) fastened below the suspension (27).

26. A settlement tank according to one of claims 1 to 25, characterised in that it is a circular settlement tank (31) with a scraper bridge (24) rotatable about a central bearing and with a channel (14) aligned radially to the centre and where appropriate, a correspondingly aligned floating sludge brake (25), and that the channel (14) is fixed on the scraper bridge (24), and where appropriate the floating sludge brake (25) is installed rigidly to the settlement tank or vice-versa.

27. A settlement tank according to claim 26, characterised in that several floating sludge brakes (25) or channels (14) are provided in a star-shaped arrangement.

28. A settlement tank according to one of claims 21 to 27, characterised in that radially arranged, submerged clean water outlet tubes comprise pivoting bearings for the floating sludge brakes.

29. A settlement tank according to one of claims 1 to 18, characterised in that the channel, by way of an operating device (35), with a forward and/or rear overflow edge, is pivotable into a submerged position which is independent of the regulated position.

30. A settlement tank according to one of claims 1 to 29, characterised in that the floating sludge outlet is continuous.

31. A settlement tank according to one of claims 1 to 30, characterised in that the submersion depth of the overflow edge (13) of the channel (14) is essentially determined by the outlet capability.

## Revendications

1. Bassin de décantation comportant une arrivée pour les eaux troubles à décanter, une évacuation d'eau pure pour l'eau épurée, une évacuation de dépôts boueux pour les boues déposées au fond du bassin et une évacuation de boues de surface pour les boues en suspension à la surface de l'eau, ledit bassin présentant, parallèlement à la surface de l'eau, une rigole comportant un rebord formant déversoir, un dispositif de réglage du rebord formant déversoir à une certaine distance de la surface de l'eau avec un flotteur et un dispositif de translation permettant la translation parallèle relative de la rigole par rapport à la surface de l'eau,
caractérisé en ce que, le rebord formant déversoir (13) est formé sur une rigole (14) capable de pivoter autour d'un axe (15),
et en ce que le flotteur (16, 22, 23) fait partie intégrante de la rigole (14, 32, 33, 34).

2. Bassin de décantation selon la revendication 1, caractérisé en ce que le flotteur (16) est fixé sur la rigole (14) du même côté de l'axe (15) que le rebord formant déversoir (13).

3. Bassin de décantation selon la revendication 2, caractérisé en ce que le flotteur (16) est monté entre le rebord formant déversoir (13) et l'axe (15) de la rigole (14).

4. Bassin de décantation selon l'une des revendications 1 à 3, caractérisé en ce que le flotteur est un cylindre creux (16) comportant des obturations frontales (8).

5. Bassin de décantation selon l'une des revendications 1 à 4, caractérisé en ce que le flotteur (22, 23) est intégré dans une paroi (6) de la rigole comportant le rebord formant déversoir (13).

6. Bassin de décantation selon l'une des revendications 1 à 5, caractérisé en ce que le flotteur (16) et/ou le palier de pivotement (15) de la rigole (19) est/sont réglable(s).

7. Bassin de décantation selon l'une des revendications 1 à 6, caractérisé en ce que la rigole (14) comporte une évacuation (3) à débit réglable.

8. Bassin de décantation selon l'une des revendications 1 à 7, caractérisé en ce que la rigole (32, 33, 34) présente de part et d'autre de l'axe (15) des volumes de flottaison différents.

9. Bassin de décantation selon la revendication 8, caractérisé en ce que les volumes de flottaison sont constitués par l'espace intérieur de la rigole (32, 33,34), qui reçoit les boues de surface en zone inférieure.

10. Bassin de décantation selon la revendication 9, caractérisé en ce que la dimension de la rigole (32, 33, 34), de l'axe (15) à l'arête postérieure (36), est au maximum égale à quatre fois la distance de l'axe au rebord formant déversoir (13).

11. Bassin de décantation selon la revendication 10, caractérisé en ce que la distance de l'axe (15) à l'arête postérieure (36) est au maximum égale à la distance de l'axe au rebord formant déversoir (13).

12. Bassin de décantation selon l'une des revendications 8 à 11, caractérisé en ce que la rigole (32, 33, 34) présente une section se rétrécissant vers le bas.

13. Bassin de décantation selon la revendication 12, caractérisé en ce que la paroi (6) de la rigole comportant le rebord formant déversoir (13) est inclinée par rapport à la surface de l'eau (5'), de préférence selon une pente telle que la formation d'algues est évitée dans une large mesure.

14. Bassin de décantation selon l'une des revendications 1 à 13, caractérisé en ce que la rigole (32, 33, 34) comporte des poids supplémentaires pour modifier la position du rebord formant déversoir (13) par rapport au niveau d'eau (5, 5').

15. Bassin de décantation selon l'une des revendications 1 à 14, caractérisé en ce qu'une pompe de boues de surface est installée dans l'espace intérieur de la rigole.

16. Bassin de décantation selon l'une des revendications 1 à 15, caractérisé en ce que la rigole (34) présente, outre un puisard ou caisson collecteur (39), des limitations (37, 38) de la section du flux dans le sens transversal.

17. Bassin de décantation selon la revendication 16, caractérisé en ce que les limitations sont des tôles de guidage (37, 38) montées dans l'espace intérieur de la rigole (34).

18. Bassin de décantation selon l'une des revendications 1 à 17, caractérisé en ce qu'un dispositif d'actionnement (35) destiné au pivotement ciblé de la rigole (34) est associé à cette dernière.

19. Bassin de décantation selon l'une des revendications 1 à 18, caractérisé en ce que la longueur de l'arête postérieure (36) de la rigole (34) correspond sensiblement à la longueur du rebord formant déversoir (13).

20. Bassin de décantation selon l'une des revendications 1 à 19, caractérisé en ce que le rebord formant déversoir (13) est sensiblement aussi long que la totalité de la rigole (34).

21. Bassin de décantation selon l'une des revendications 1 à 20, caractérisé en ce qu'au moins un ralentisseur (25) de boues de surface est prévu avec une paroi émergeant de la surface de l'eau (5'), en ce que la paroi (28) présente une suspension (27) à distance de la zone de déplacement de la rigole (14), en ce que rigole et ralentisseur (25) de boues de surface peuvent être déplacés en translation l'un par rapport à l'autre par le dispositif de déplacement (24), le ralentisseur (25) de boues de surface opérant un mouvement d'effacement lorsque la rigole (14) atteint la paroi (28) et étant ramené à sa position initiale par un dispositif de retour (29, 30) après le passage de la rigole.

22. Bassin de décantation selon la revendication 21, caractérisé en ce que la suspension est un support de pivotement (27) et en ce que le mouvement d'effacement est un mouvement de pivotement du ralentisseur de boues de surface (25).

23. Bassin de décantation selon la revendication 21, caractérisé en ce que la paroi est constituée dans un matériau flexible et que le mouvement d'effacement est une déformation de matériau.

24. Bassin de décantation selon l'une des revendications 21 à 23, caractérisé en ce que le dispositif de retour comporte un flotteur (29) fixé sur le ralentisseur (25) de boues de surface dans la zone de la surface de l'eau (5').

25. Bassin de décantation selon l'une des revendications 21 à 24, caractérisé en ce que le dispositif de retour présente un poids (30) fixé au dessous de la suspension (27).

26. Bassin de décantation selon l'une des revendications 1 à 25, caractérisé en ce que ledit bassin est un bassin de décantation rond (31) comportant un pont racleur de boue (24) rotatif autour d'un palier central et comportant une rigole (14) orientée dans le sens radial par rapport au centre et le cas échéant un ralentisseur (25) de boues de surface orienté de manière correspondante,
et en ce que la rigole (14) est fixée sur le pont racleur de boue (24) et le cas échéant le ralentisseur pour boues de surface (25) est installé de manière fixe par rapport au bassin de décantation ou inversement.

27. Bassin de décantation selon la revendication 26, caractérisé en ce que plusieurs ralentisseurs (25) de boues de surface ou plusieurs rigoles (14) sont prévu(e)s, disposé(e)s en étoile.

28. Bassin de décantation selon l'une des revendications 21 à 27, caractérisé en ce que des tubulures d'évacuation d'eau pure, plongeantes et disposées radialement, présentent des supports de pivotement destinés aux ralentisseurs de boues de surface.

29. Bassin de décantation selon l'une des revendications 1 à 18, caractérisé en ce que la rigole est capable, au moyen d'un dispositif d'actionnement (35), de pivoter, par un rebord formant déversoir antérieur et/ou postérieur, dans une position immergée indépendante de la position réglée.

30. Bassin de décantation selon l'une des revendications 1 à 29, caractérisé en ce que l'évacuation des boues de surface est continue.

31. Bassin de décantation selon l'une des revendications 1 à 30, caractérisé en ce que la profondeur d'immersion du rebord formant déversoir (13) de la rigole (14) est essentiellement définie par la puissance d'évacuation.
